# EUROPÄISCHE PATENTSCHRIFT

(11) **EP 2 890 191 B1**
(45) Veröffentlichungstag und Bekanntmachung des Hinweises auf die Patenterteilung: **11.10.2017**
(21) Anmeldenummer: 13199810.6
(22) Anmeldetag: 30.12.2013
(51) Int. Cl.: H04W 52/50

(54) **Verfahren zur sicheren Kommunikation in einem Kommunikationsnetzwerk**
Method for secure communication in a communication network
Procédé de communication sûre dans un réseau de communication

(43) Veröffentlichungstag der Anmeldung: 01.07.2015
(73) Patentinhaber: Deutsche Telekom AG, 53113 Bonn (DE)
(72) Erfinder: Wilhelm, Uwe-Georg, 53113 Bonn (DE); Krause, Thomas, 44807 Bochum (DE)
(74) Vertreter: Patentship Patentanwaltsgesellschaft mbH

(56) Entgegenhaltungen:
- WO-A2-2008/103991
- US-A1- 2006 056 636
- US-A1- 2011 106 954

## Beschreibung

Die vorliegende Erfindung betrifft ein Verfahren zur sicheren Kommunikation zwischen Kommunikationsentitäten in einem Kommunikationsnetzwerk und ein Kommunikationssystem mit einer ersten Kommunikationsentität und einer zweiten Kommunikationsentität, die nach einem solchen Verfahren sicher kommunizieren. Insbesondere betrifft die Erfindung ein Heimnetzwerk, das einen sicheren Kommunikationskanal bereitstellt, um darüber zu kommunizieren, insbesondere zur Steuerung oder Fernsteuerung von Kommunikationsentitäten in dem Heimnetzwerk.

Mit der Entwicklung moderner Kommunikationstechnologien sind Konzepte zur Hausautomatisierung bzw. -vernetzung entstanden, welche unter dem Begriff "Smart Home" zusammengefasst sind. Einen weiteren wichtigen Aspekt bilden hierbei die Heimnetze oder Heimnetzwerke bzw. "Home Area Networks" (HAN), welche eine netzwerkbasierte Steuerung unterschiedlicher Aktoren, wie beispielsweise Überwachungs- und Sicherungsanlagen, Überwachungskameras, Jalousien, Türschließanlagen oder Heizungsanlagen ermöglichen. Für das Kommunikationsnetzwerk werden Ethernet, WLAN, Bluetooth oder Powerline eingesetzt. Als eine zentrale Kommunikationsentität wird dabei ein zentraler Steuerungsserver eingesetzt, welcher oft als "Home Gateway" bezeichnet wird.

Eine Anwendung, die in Heimnetzwerken implementiert werden kann, ist die Fernsteuerung der Aktoren beispielsweise durch ein Mobiltelefon oder durch einen PC. Ein Problem hierbei ist jedoch die Vermeidung eines unerwünschten Zugriffs auf die Aktoren durch Dritte. Hierbei kann zwar ein sicherer Kommunikationskanal zwischen einem Steuerungsserver und einem Aktor genutzt werden, welcher auf einer Signalverschlüsselung mittels eines Geheimnisses, beispielsweise mittels eines kryptographischen Schlüssels oder eines Passwortes, basiert. Zum Aufbau eines sicheren Kommunikationskanals beispielsweise durch Pairing ist vorab jedoch eine im Allgemeinen ungesicherte Initiierung einer Kommunikationsverbindung und ggf. ein Austausch des Geheimnisses zwischen dem Steuerungsserver und dem Aktor notwendig.

Die Druckschrift US 2006/056636 A1 beschreibt ein Verfahren zur Bereitstellung eines sicheren Kanals zwischen Funkeinrichtungen. Das Verfahren enthält ein Reduzieren der Sendeleistung der Einrichtungen in Verbindung mit einem Platzieren der Einrichtungen in enge Nähe zueinander.

Die Druckschrift WO 2008/103991 A2 beschreibt Verfahren und Einrichtungen, die Nahfeldkommunikationslinks nutzen, um sich zu authentifizieren und um einen Vertrauensbereich zu schaffen.

Die Druckschrift US 2011/106954 A1 beschreibt Einrichtungen, die induktiv miteinander kommunizieren.

Es ist die Aufgabe der vorliegenden Erfindung, ein Konzept zum Austausch von vorbestimmten Nachrichten innerhalb eines Kommunikationsnetzwerkes mit erhöhter Abhörsicherheit zu schaffen.

Diese Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass in einem Kommunikationsnetzwerk, beispielweise in einem Heimnetzwerk, ein sicherer Kommunikationskanal zwischen zwei Kommunikationsentitäten geschaffen werden kann, indem die Sendeleistung zum Austausch einer vorbestimmten Nachricht, beispielsweise eines Geheimnisses, reduziert wird, so dass im Wesentlichen nur noch eine Kommunikation im Nahbereich, also innerhalb des Heimnetzwerks oder sogar innerhalb eines Radius in dem Heimnetzwerk, beispielswese 1m oder weniger, möglich ist. Über diesen sicheren Kommunikationskanal lässt sich beispielsweise ein Geheimnis wie Authentifizierungsschlüssel oder kryptographischer Schlüssel abhörsicher übertragen. Die Übertragungssicherheit kann über das Absenken der Sendeleistung für die Übertragung sicherheitsrelevanter Nachrichten, wie beispielsweise kryptographischer Schlüssel, erhöht werden, wobei die vorbestimmte Nachricht dann ohne aufwendige Sicherungsverfahren einfach über den Kanal mit abgesenkter Sendeleistung übertragen werden kann. Auf diese Weise ist beispielsweise ein abhörsicherer Austausch eines oder mehrerer kryptographischer Schlüssel, wenn gezielt und beispielsweise ausschließlich für die Übertragung des kryptographischen Schlüssels die Sendeleistung reduziert wird. Die Reduktion der Sendeleistung kann derart sein, dass eine drahtlose Datenübertragung nur über eine kurze Distanz, beispielsweise 0.2m. 0.5m oder 1m durchgeführt werden kann.

Erfindungsgemäß wird die Sendeleistung ausschließlich zum Aussenden einer oder mehrerer vorbestimmter Nachrichten, insbesondere von Geheimnissen wie kryptographischen Schlüsseln oder digitalen Zertifikaten gegenüber der Sendeleistung im Normalbetrieb abgesenkt. Für weitere Kommunikationen kann die Sendeleistung dann wieder erhöht werden, um im Normalbetrieb zu kommunizieren. Der Normalbetrieb kann derjenige Betrieb sein, bei dem die Sendeleistung üblicherweise derart eingestellt ist, dass Nachrichten mit einer vorgegeben Bitfehlerrate bzw. Bitfehlerwahrscheinlichkeit übertragen werden. Dies wird üblicherweise durch die automatische Leistungskontrolle

(AGC; Automatic Gain Control) eingestellt. Der Normalbetrieb kann jedoch die maximal mögliche Sendeleistung umfassen.

Gemäß einem Aspekt betrifft die Erfindung ein Verfahren zur sicheren Kommunikation zwischen Kommunikationsentitäten in einem Kommunikationsnetzwerk, mit: Reduzieren der Sendeleistung einer ersten Kommunikationsentität, insbesondere eines Steuerungsservers, das ein Home Gateway sein kann; und Aussenden einer vorbestimmten Nachricht mit der reduzierten Sendeleistung von der ersten Kommunikationsentität zu einer zweiten Kommunikationsentität, beispielsweise zu einem tragbaren Pairing-Kommunikationsentität.

Das Home-Gateway (HG) kann ein Gateway sein, das zwischen dem Zugangsnetz und dem Heimnetzwerk liegt und die verschiedenen Techniken, die in der Heimvernetzung eingesetzt werden, unterstützt. Es realisiert die Verbindung zwischen Heimnetzwerk und Internet mit den verschiedenen Diensten. Die Technologien von Heimnetzen können drahtlos sein, wie bei Bluetooth oder HomeRF, aber ebenso drahtgebunden über eine Verkabelung, die Telefonleitungen oder die Stromleitungen mittels Powerline (PLC). Das Home-Gateway übernimmt innerhalt des Heimnetzes Vermittlungsfunktionen.

Der Begriff "Pairing" bedeutet, zwei technische Kommunikationsentitäten drahtlos miteinander zu verbinden, d.h. eine Kommunikationsverbindung aufzubauen und miteinander zu kommunizieren, um beispielsweise Daten und Informationen auszutauschen. Pairing wird insbesondere bei Bluetooth gemäß dem Industriestandard IEEE 802.15.1 eingesetzt, wobei zur Authentifizierung eine Nachricht, insbesondere ein Passwort bzw. ein kryptographischer Schlüssel zwischen beiden Kommunikationsentitäten ausgetauscht wird.

Das Kommunikationsnetzwerk kann durch ein Heimnetzwerk gebildet sein.

Der Vorteil eines solchen Verfahrens ist, dass die vorbestimmte Nachricht nur innerhalb des Kommunikationsnetzwerks gelesen werden kann. Stehen die erste Kommunikationsentität und die zweite Kommunikationsentität nahe beieinander, beispielsweise in einem Heimnetzwerk, so ist es nicht autorisierten Personen oder Kommunikationsentitäten aufgrund der geringen Leistung, mit der die Nachricht abgestrahlt wird, nicht möglich außerhalb eines bestimmten Bereichs (dem Bereich des Heimnetzwerks) diese Nachricht mitzulesen. Die Reduktion der Sendeleistung kann beispielsweise gegenüber einem Normalbetrieb bzw. gegenüber einer gegenwärtigen Sendeleistung vorgenommen werden. Es kann aber auch eine vorbestimmte Sendeleistung dazu genutzt werden oder die Sendeleistung kann entfernungsabhängig eingestellt werden.

Dadurch ist es möglich, die vorbestimmte Nachricht an der ersten Kommunikationsentität durch die zweite Kommunikationsentität zu empfangen. Ist die zweite Kommunikationsentität mobil, so kann die zweite Kommunikationsentität durch einen Benutzer zusammen mit der vorbestimmten Nachricht zu einer dritten Kommunikationsentität getragen werden, sodass die vorbestimmte Nachricht ebenfalls mit reduzierter Sendeleistung zu der dritten Kommunikationsentität ausgesendet werden kann. Auf diese Weise kann ein abhörsicherer Austausch der vorbestimmten Nachricht zwischen einer Mehrzahl von Kommunikationsentitäten erfolgen. Ist die vorbestimmte Nachricht beispielsweise ein kryptographischer Schlüssel, so können die Kommunikationsentitäten anschließend einen verschlüsselten Kommunikationskanal aufbauen und danach mit erhöhter Sendeleistung kommunizieren.

Gemäß einer Ausführungsform umfasst das Verfahren ferner ein Erhöhen der Sendeleistung der ersten Kommunikationsentität nach dem Aussenden der vorbestimmten Nachricht. Dadurch kann die Kommunikation über einen beispielsweise verschlüsselten Kommunikationskanal mit der üblichen bzw. regulären bzw. maximal möglichen Sendeleistung durchgeführt werden.

Der Vorteil, die Sendeleistung der ersten Kommunikationsentität nach dem Aussenden der vorbestimmten Nachricht wieder zu erhöhen liegt darin, dass die erste Kommunikationsentität dann wieder bereit ist, mit weiter entfernten Kommunikationsentitäten, beispielsweise mobilen Kommunikationsentitäten außerhalb des Heimnetzwerks zu kommunizieren. Dies können beispielsweise mobile Kommunikationsentitäten von autorisierten Nutzern sein, die über die erste Kommunikationsentität Zugang zum Heimnetzwerk erlangen möchten. Die Sendeleistung der ersten Kommunikationsentität kann beispielsweise unmittelbar nach dem Aussenden der vorbestimmten Nachricht wieder erhöht werden, um die Unzugänglichkeit der ersten Kommunikationsentität möglichst gering zu halten.

Gemäß einer Ausführungsform umfasst das Verfahren ferner ein Reduzieren der Sendeleistung der zweiten Kommunikationsentität; und ein Aussenden der vorbestimmten Nachricht mit der reduzierten Sendeleistung von der zweiten Kommunikationsentität zu einer dritten Kommunikationsentität, insbesondere über eine Bluetooth-Kommunikationsverbindung. Die dritte Kommunikationsentität kann ein Aktor sein, wie beispielsweise eine Türschließanlage oder ein Elektromotor, welcher eine Jalousie antreibt.

Der Vorteil des Aussendens der vorbestimmten Nachricht mit reduzierter Sendeleistung von der zweiten Kommunikationsentität zu der dritten Kommunikationsentität liegt darin, dass auch der zweite Kommunikationskanal von der zweiten Kommunikationsentität zu der dritten Kommunikationsentität sicherer ist. Die vorbestimmte Nachricht kann so nur innerhalb des Kommunikationsnetzwerks gelesen werden. Stehen die zweite Kommunikationsentität und die dritte Kommunikationsentität nahe beieinander, beispielsweise in einem Heimnetzwerk, so ist es nicht autorisierten Kommunikationsentitäten aufgrund der geringen Leistung, mit der die Nachricht abgestrahlt wird, nicht möglich außerhalb eines bestimmten Bereichs, beispielsweise 1m oder weniger, diese Nachricht mitzulesen. Wie oben bezüglich der Sendeleistungsreduktion zwischen erster und zweiter Kommunikationsentität bereits erwähnt, kann die Reduktion der Sendeleistung beispielsweise gegenüber einem Normalbetrieb bzw. gegenüber einer gegenwärtigen Sendeleistung vorgenommen werden. Es kann aber auch eine vorbestimmte Sendeleistung dazu genutzt werden oder die Sendeleistung kann entfernungsabhängig eingestellt, insbesondere reduziert werden. Die Reduktion der Sendeleistung zwischen zweiter und dritter Kommunikationsentität kann unterschiedlich sein zur Reduktion der Sendeleistung zwischen erster und zweiter Kommunikationsentität, beispielsweise entfernungsabhängig oder vorbestimmt.

Die zweite Kommunikationsentität kann beispielsweise ein mobiles bzw. tragbares Pairing-Gerät sein, dass durch einen Benutzer nah an die jeweilige Kommunikationsentität gebracht werden kann, um mit reduzierter Sendeleistung, sozusagen im "Flüstermodus", die vorbestimmte Nachricht zu empfangen und an andere Kommunikationsentitäten weiterzugeben. Auf diese Weise wird die vorbestimmte Nachricht abhörsicher ausgetauscht und kann beispielsweise anschließend dazu genutzt werden, einen verschlüsselten Kommunikationskanal zwischen Kommunikationsentitäten, welche die vorbestimmte Nachricht kennen, auszutauschen.

Gemäß einer Ausführungsform umfasst das Verfahren ferner ein Erhöhen der Sendeleistung der zweiten Kommunikationsentität nach dem Aussenden der vorbestimmten Nachricht. Dadurch kann die zweite Kommunikationsentität andere Nachrichten mit regulärer Sendeleistung auch über längere Distanzen hinweg übertragen.

Der Vorteil, die Sendeleistung der zweiten Kommunikationsentität nach dem Aussenden der vorbestimmten Nachricht wieder zu erhöhen liegt darin, dass die zweite Kommunikationsentität dann wieder bereit ist, mit weiter entfernten Kommunikationsentitäten, beispielsweise mobilen Kommunikationsentitäten außerhalb des Heimnetzwerks zu kommunizieren. Dies können beispielsweise mobile Kommunikationsentitäten von autorisierten Nutzern sein, die über die zweite Kommunikationsentität Zugang zu den Kommunikationsentitäten des Heimnetzwerks erlangen möchten. Die Sendeleistung der zweiten Kommunikationsentität kann beispielsweise unmittelbar nach dem Aussenden der vorbestimmten Nachricht wieder erhöht werden, um die Unzugänglichkeit der zweiten Kommunikationsentität möglichst gering zu halten.

Gemäß einer Ausführungsform umfasst das Verfahren ein Aufbauen einer sicheren Kommunikationsverbindung, insbesondere einer sicheren Bluetooth Kommunikationsverbindung, zwischen der dritten Kommunikationsentität und der ersten Kommunikationsentität unter Verwendung der vorbestimmten Nachricht mit gegenüber der jeweils reduzierten Sendeleistung erhöhter Sendeleistung. Die sichere Kommunikationsverbindung kann durch einen verschlüsselten Kanal realisiert werden.

Der Vorteil, eine sichere Kommunikationsverbindung zwischen der dritten Kommunikationsentität und der ersten Kommunikationsentität unter Verwendung der vorbestimmten Nachricht mit gegenüber der jeweils reduzierten Sendeleistung erhöhter Sendeleistung aufzubauen liegt darin, dass die sichere Kommunikationsverbindung mit der Leistung im Normalbetrieb betrieben werden kann. Damit können hohe Datenraten über diese Verbindung übertragen werden ohne dass es zu permanenten Wiederholungen kommt, die aufgrund von Bitfehlern nötig wären. Bitfehler treten dann vermehrt auf, wenn die Übertragungsqualität schlecht ist, beispielsweise beim Betreiben mit geringer Leistung, wie oben beschrieben zur Übertragung des kryptographischen Schlüssels, welcher die vorbestimmte Nachricht bilden kann.

Gemäß einer Ausführungsform des Verfahrens wird über die Kommunikationsverbindung, insbesondere verschlüsselte Kommunikationsverbindung das Pairing zwischen der dritten Kommunikationsentität und der ersten Kommunikationsentität durchgeführt. Das Pairing wird durch den Austausch der vorbestimmten Nachricht durch die zweite Kommunikationsentität eingeleitet. Daraufhin können die erste und die dritte Kommunikationsentität eine sichere Kommunikationsverbindung herstellen, welche mittels der vorbestimmten Nachricht gesichert, beispielsweise verschlüsselt werden kann.

Gemäß einer Ausführungsform umfasst das Verfahren ein Aufbauen einer Kommunikationsverbindung, insbesondere einer WLAN Kommunikationsverbindung, zwischen einer Steuerentität und der ersten Kommunikationsentität; ein Aussenden eines Steuersignals zur Steuerung der dritten Kommunikationsentität durch die Steuerentität an die erste Kommunikationsentität; und ein Aussenden eines Steuerbefehls zur Steuerung der dritten Kommunikationsentität zwischen der ersten Kommunikationsentität und der dritten Kommunikationsentität über die Kommunikationsverbindung, insbesondere verschlüsselte Kommunikationsverbindung.

Der Vorteil eines Aufbauens einer Kommunikationsverbindung zwischen Steuerentität und der ersten Kommunikationsentität liegt darin, dass diese als gesicherte Verbindung aufgebaut werden kann, denn die Steuerentität, beispielsweise ein Smartphone, ein Mobiltelefon oder ein TabletPC in der Verfügung eines berechtigten Nutzers, der den Schlüssel kennt oder in Erfahrung bringen kann, kann diesen Schlüssel zum Aufbau der Kommunikationsverbindung nutzen. Über diese gesicherte Kommunikationsverbindung zwischen Steuerentität und erster Kommunikationsentität, insbesondere Home Gateway, sowie der gesicherten Kommunikationsverbindung zwischen erster Kommunikationsentität und dritter Kommunikationsentität kann der berechtigte Nutzer bzw. die berechtigte Steuerentität dann die dritte Kommunikationsentität, beispielsweise einen Aktor, in gesicherter bzw. verschlüsselter Weise steuern.

Gemäß einer Ausführungsform des Verfahrens ist die dritte Kommunikationsentität ein steuerbarer Aktor, insbesondere eine Tür-Schließanlage oder ein Elektromotor, wobei die erste Kommunikationsentität ein Kommunikationsserver ist, insbesondere ein Home Gateway.

Der Vorteil liegt darin, dass der steuerbare Aktor über die erste Kommunikationsentität wie beispielsweise Home Gateway in gesicherter bzw. verschlüsselter Weise angesteuert und/oder abgefragt werden kann.

Gemäß einer Ausführungsform des Verfahrens ist die vorbestimmte Nachricht ein kryptographischer Schlüssel oder ein digitales Zertifikat. Auf diese Weise kann der kryptographische Schlüssel oder das digitale Zertifikat mit reduzierter Sendeleistung, also gesichert, übertragen werden.

Gemäß einer Ausführungsform des Verfahrens wird die jeweils reduzierte Sendeleistung für eine reduzierte Signalreichweite, insbesondere geringer als 1m, reduziert.

Der Vorteil des Reduzierens der Sendeleistung für eine reduzierte Signalreichweite liegt darin, dass nur Kommunikationsentitäten innerhalb des Heimnetzwerks die Nachrichten empfangen können, nicht jedoch Angreifer oder Mithörer von außerhalb. Die Signalreichweite kann in Abhängigkeit der Größe des Heimnetzwerks eingestellt werden.

Gemäß einem Aspekt betrifft die Erfindung ein Kommunikationssystem mit einer ersten Kommunikationsentität, beispielsweise einem Home Gateway und einer zweiten Kommunikationsentität, beispielsweise einem Pairing-Gerät, das tragbar sein kann, wobei die erste Kommunikationsentität ausgebildet ist, die Sendeleistung zum Aussenden einer vorbestimmten Nachricht zu reduzieren und die vorbestimmte Nachricht an die zweite Kommunikationsentität mit der reduzierten Sendeleistung auszusenden.

Der Vorteil eines solchen Kommunikationssystems liegt darin, dass die vorbestimmte Nachricht nur innerhalb des Kommunikationssystems empfangen werden kann. Stehen die erste Kommunikationsentität und die zweite Kommunikationsentität nahe beieinander, beispielsweise in einem Heimnetzwerk, so ist es nicht autorisierten Personen aufgrund der geringen Leistung, mit der die Nachricht abgestrahlt wird, nicht möglich außerhalb eines bestimmten Bereichs (dem Bereich des Heimnetzwerks) diese Nachricht zu empfangen. Die Reduktion der Sendeleistung kann beispielsweise gegenüber einem Normalbetrieb bzw. gegenüber einer gegenwärtigen Sendeleistung vorgenommen werden. Es kann aber auch eine vorbestimmte Sendeleistung dazu genutzt werden oder die Sendeleistung kann entfernungsabhängig eingestellt werden.

Gemäß einer Ausführungsform des Kommunikationssystems ist die erste Kommunikationsentität ausgebildet, um die Sendeleistung nach dem Aussenden der vorbestimmten Nachricht zu erhöhen.

Der Vorteil, die Sendeleistung der ersten Kommunikationsentität nach dem Aussenden der vorbestimmten Nachricht zu erhöhen liegt darin, dass die erste Kommunikationsentität dann wieder bereit ist, mit weiter entfernten Kommunikationsentitäten, beispielsweise mobilen Kommunikationsentitäten oder mit der regulären Sendeleistung über einen gesicherten, beispielsweise verschlüsselten, Kommunikationskanal zu kommunizieren.. Die Sendeleistung der ersten Kommunikationsentität kann beispielsweise unmittelbar nach dem Aussenden der vorbestimmten Nachricht wieder erhöht werden, um anschließend mit der regulären Sendeleistung auch über größere Distanzen zu kommunizieren. Auch treten bei wieder erhöhter Sendeleistung weniger Übertragungsfehler auf, so dass es zu weniger Wiederholungen von Datenpaketen kommen kann.

Gemäß einer Ausführungsform des Kommunikationssystems ist die zweite Kommunikationsentität ausgebildet, um die vorbestimmte Nachricht mit reduzierter Sendeleistung an eine dritte Kommunikationsentität auszusenden.

Der Vorteil des Aussendens der vorbestimmten Nachricht mit reduzierter Sendeleistung von der zweiten Kommunikationsentität zu der dritten Kommunikationsentität liegt darin, dass auch der zweite Kommunikationskanal von der zweiten Kommunikationsentität zu der dritten Kommunikationsentität sicher ist. Die vorbestimmte Nachricht kann so nur innerhalb des Kommunikationsnetzwerks gelesen werden. Stehen die zweite Kommunikationsentität und die dritte Kommunikationsentität nahe beieinander, beispielsweise in einem Heimnetzwerk, so ist es nicht autorisierten Personen aufgrund der geringen Leistung, mit der die Nachricht abgestrahlt wird, nicht möglich außerhalb eines bestimmten Bereichs (dem Bereich des Heimnetzwerks) diese Nachricht mitzulesen. Wie oben bezüglich der Sendeleistungsreduktion zwischen erster und zweiter Kommunikationsentität bereits erwähnt, kann die Reduktion der Sendeleistung beispielsweise gegenüber einem Normalbetrieb bzw. gegenüber einer gegenwärtigen Sendeleistung vorgenommen werden. Es kann aber auch eine vorbestimmte Sendeleistung dazu genutzt werden oder die Sendeleistung kann entfernungsabhängig eingestellt werden. Die Reduktion der Sendeleistung zwischen zweiter und dritter Kommunikationsentität kann unterschiedlich sein zur Reduktion der Sendeleistung zwischen erster und zweiter Kommunikationsentität, beispielsweise entfernungsabhängig oder in vorbestimmter Weise.

Gemäß einer Ausführungsform des Kommunikationssystems ist die dritte Kommunikationsentität ausgebildet, um eine sichere Kommunikationsverbindung zu der ersten Kommunikationsentität mit gegenüber der reduzierten Signalleistung erhöhter Signalleistung aufzubauen. Hierbei kann beispielsweise ein gesicherter bzw. verschlüsselter Kommunikationskanal aufgebaut werden.

Der Vorteil des Aufbauens einer sicheren Kommunikationsverbindung zu der ersten Kommunikationsentität mit gegenüber der reduzierten Signalleistung erhöhter Signalleistung liegt darin, dass bei erhöhter Signalleistung es zu weniger Übertragungsfehlern kommt, so dass weniger Datenpakete wiederholt werden müssen. Die Übertragung ist somit zugleich sicher als auch effizient.

Gemäß einer Ausführungsform des Kommunikationssystems ist die dritte Kommunikationsentität ein steuerbarer Aktor, insbesondere eine Tür-Schließanlage oder ein Elektromotor oder ein Haushaltsgerät, wobei die erste Kommunikationsentität ein Kommunikationsserver, insbesondere ein Home Gateway ist.

Der Vorteil eines solchen Kommunikationssystems liegt darin, dass der steuerbare Aktor, beispielsweise die Tür-Schließanlage, das Haushaltsgerät und/oder der Elektromotor über das Home Gateway in gesicherter bzw. verschlüsselter Weise angesteuert und/oder abgefragt werden kann. Damit können unberechtigte Zugriffe auf das Heimnetzwerk abgewehrt werden.

Weitere Ausführungsbeispiele werden Bezug nehmend auf die beiliegenden Zeichnungen erläutert. Es zeigen:
- Fig. 1: eine schematische Darstellung eines Kommunikationsnetzwerkes gemäß einer Ausführungsform; und
- Fig. 2: eine schematische Darstellung eines Verfahrens zur sicheren Kommunikation zwischen Kommunikationsentitäten in einem Kommunikationsnetzwerk gemäß einer Ausführungsform.

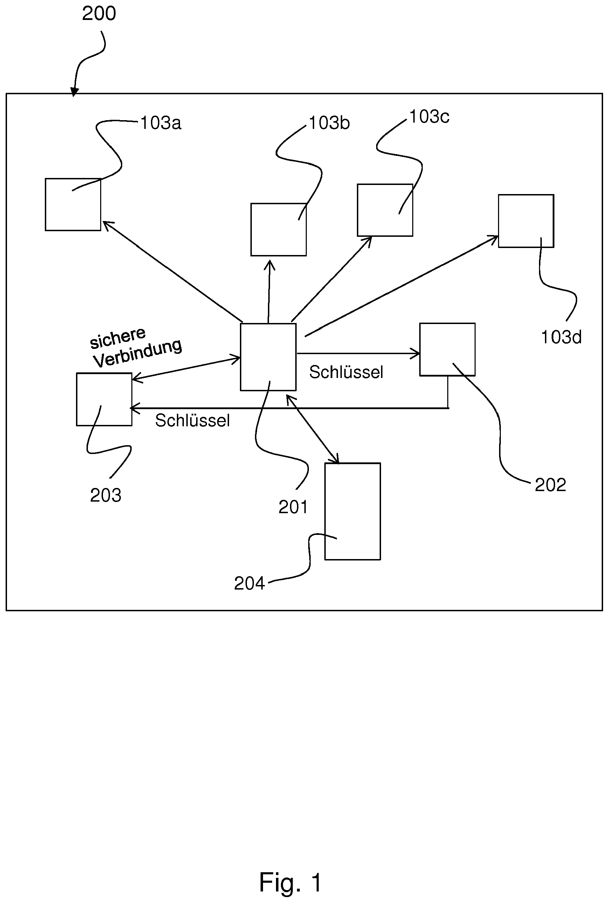

Fig. 1 zeigt eine schematische Darstellung eines Kommunikationssystems 200, beispielsweise eines Heimnetzwerkes, gemäß einer Ausführungsform. Das Kommunikationssystem 200 umfasst eine erste Kommunikationsentität 201, beispielsweise ein Home Gateway, sowie eine zweite Kommunikationsentität 202, beispielsweise ein mobiles bzw. tragbares Pairing-Gerät. Ferner ist eine dritte Kommunikationsentität 203 vorgesehen. Die dritte Kommunikationsentität 203 kann ein Aktor sein, beispielsweise eine Türschließanlage. Das Kommunikationssystem 200 kann ferner weitere dritte Kommunikationsentitäten aufweisen, wie etwa eine Türschließanlage 203, eine Kamera 103b, eine Waschmaschine 103c eine motorbetriebene Jalousie 103d.

Die zweite Kommunikationsentität 202, beispielsweise ein mobiles Pairing-Gerät, wird eingesetzt, eine vorbestimmte Nachricht, beispielsweise einen kryptographischen Schlüssel, zwischen den Kommunikationsentitäten mit jeweils reduzierter Sendeleistung zu übertragen. Auf diese Weise können die Kommunikationsentitäten, welche die vorbestimmte Nachricht kennen, eine gesicherte Kommunikationsverbindung aufbauen und dann mit regulärer Sendeleistung kommunizieren.

Das Kommunikationssystem umfasst ferner eine Steuerentität 204, beispielsweise ein Smartphone, welche zur Steuerung der dritten Kommunikationsentität 203 über die erste Kommunikationsentität 201 vorgesehen ist. Hierzu kann beispielsweise eine WLAN-Verbindung zwischen der Steuerentität 204 und der ersten Kommunikationsentität 201 aufgebaut werden. Hierzu kann im Vorfeld ein sicherer, beispielsweise verschlüsselter, Kommunikationskanal zwischen der ersten Kommunikationsentität 201 und der zweiten Kommunikationsentität 202 aufgebaut werden. Hierzu ist ein Austausch einer vorbestimmten Nachricht, beispielsweise eines kryptographischen Schlüssels, wünschenswert. Diese Nachricht wird jeweils mit reduzierter Sendeleistung wie nachfolgend beschrieben im Kommunikationsnetzwerk 200 verteilt:
Die erste Kommunikationsentität 201 reduziert ihre Sendeleistung und sendet eine vorbestimmte Nachricht, beispielsweise einen Schlüssel "Key", mit der reduzierten Sendeleistung zu der zweiten Kommunikationsentität 202. Damit kann die vorbestimmte Nachricht sicher zu der zweiten Kommunikationsentität 202 übertragen werden, denn aufgrund der reduzierten Sendeleistung ist die Empfangbarkeit der Nachricht räumlich stark eingeschränkt. Die Sendeleistung kann beispielsweise derart reduziert werden, dass nur noch Kommunikationsentitäten innerhalb des Heimnetzwerks 200 die Nachricht empfangen können und ein externer Angreifer keine ausreichende Leistung empfangen kann, um die Nachricht zu erkennen. Weiterhin ist es möglich, die Sendeleistung auf den Nahbereich, also beispielsweise auf einen Bereich von weniger als 1m oder sogar 0.2m zwischen den jeweiligen mit reduzierter Sendeleistung kommunizierenden Kommunikationsentitäten einzugrenzen, beispielsweise 1m oder weniger, so dass die vorbestimmte Nachricht nur noch innerhalb eines so eingeschränkten Empfangsradius empfangen werden kann.

In gleicher Weise, d.h. unter Reduktion der Sendeleistung, kann die vorbestimmte Nachricht, z.B. der Schlüssel "Key", von der zweiten Kommunikationsentität 202 an die dritte Kommunikationsentität 203 oder an eine der weiteren dritten Kommunikationsentitäten 103 a-d, weitergeleitet werden. Anschließend kann zwischen der ersten Kommunikationsentität 201 und der dritten Kommunikationsentität 203 ein sicherer bzw. verschlüsselter Kommunikationskanal unter Verwendung der vorbestimmten Nachricht, beispielsweise eines Geheimnisses, aufgebaut werden.

Der verschlüsselte Kommunikationskanal kann beispielsweise mit den bekannten Verschlüsselungsverfahren aufgebaut werden, z.B. über asymmetrische Verschlüsselungsverfahren wie RSA, Merkle-Hellman, McEliece, Rabin, Chor-Rivest, Elgamal oder über symmetrische Verschlüsselungsverfahren wie AES, DES, 3-DES, IDEA, RC2, RC4, RC5, RC6. Der verschlüsselte Kommunikationskanal bzw. die verschlüsselte Kommunikationsverbindung kann z.B. über Pairing aufgebaut werden, wenn die beiden Kommunikationsentitäten das Pairing-Protokoll unterstützen, beispielsweise, wenn die dritte Kommunikationsentität 203 und die zweite Kommunikationsentität 202 über Bluetooth kommunizieren und das Bluetooth-Pairing unterstützen. Der Nutzer kann die zweite Kommunikationsentität 202 zuerst neben der ersten Kommunikationsentität 201 positionieren, um die vorbestimmte Nachricht zu der zweiten Kommunikationsentität 202 abhörsicherer mit reduzierter Sendeleistung zu übertragen. Danach kann der Nutzer die zweite Kommunikationsentität 202 zu der dritten Kommunikationsentität 203 tragen bzw. neben der dritten Kommunikationsentität 202 positionieren, um dann die vorbestimmte Nachricht zu der dritten Kommunikationsentität 203 mit reduzierter Sendeleistung zu übertragen. Danach können die erste Kommunikationsentität 201 und die dritte Kommunikationsentität direkt und mit regulärer Sendeleistung sicher bzw. verschlüsselt kommunizieren. Bei gering eingestellter Sendeleistung ist das Verfahren besonders sicher, da keine sensiblen Funkdaten außerhalb des Hauses abgestrahlt werden.

Dieser gesicherte Kommunikationskanal kann jetzt jedoch mit der ursprünglichen, d.h. für den Normalbetrieb eingerichteten Sendeleistung arbeiten. Ein nicht berechtigter Angreifer, der die vorbestimmte Nachricht, z.B. den Schlüssel "Key" nicht kennt, hat so keine Möglichkeit, in den gesicherten Kommunikationskanal zu gelangen.

Die Steuerentität 204 kann eine weitere Kommunikationsverbindung zu der ersten Kommunikationsentität 201 aufbauen. Die weitere Kommunikationsverbindung kann eine WLAN-Verbindung sein oder ein VPN-Zugang oder über eine Internet-Verbindung sein. Die erste Kommunikationsentität 201 kann beispielsweise so ausgeführt sein, dass der Aufbau eines Kommunikationskanals durch die sich authentifizierende Steuerentität 204 nur direkt im Anschluss an das Übersenden der Identifikationsdaten möglich ist. Dies erhöht die Sicherheit, indem lange Zwischenräume zwischen Anmelden und Nutzen der Verbindung ausgeblendet werden.

In einer Ausführungsform wird die zweite Kommunikationsentität in der Nähe der ersten Kommunikationsentität 201, beispielsweise weniger als 1m oder 0.2m, von der ersten Kommunikationsentität 201 entfernt, angeordnet. Ausgelöst beispielsweise durch einen Tastendruck an der zweiten Kommunikationsentität 202 überträgt diese an die erste Kommunikationsentität 201 eine Aufforderung zum Aussenden der vorbestimmten Nachricht, beispielsweise eines kryptographischen Schlüssels für das Pairing. Die erste Kommunikationsentität 201 überträgt daraufhin die vorbestimmte Nachricht, beispielsweise einen kryptographischen Schlüssel oder einen Zugangsberechtigungscode zum Pairing mit gegenüber einem Normalbetrieb reduzierter Sendeleistung zu der zweiten Kommunikationsentität 202. Damit kann die vorbestimmte Nachricht sicher von der ersten Kommunikationsentität 201 zu der zweiten Kommunikationsentität 202 übertragen werden, denn aufgrund der reduzierten Sendeleistung ist die Empfangbarkeit des Zugangsberechtigungscodes, d.h. der vorbestimmten Nachricht, räumlich stark eingeschränkt.

Daraufhin wird die zweite Kommunikationsentität 202 in der Nähe dritten Kommunikationsentität, beispielsweise 0.2m, angeordnet, und leitet die vorbestimmte Nachricht an die dritte Kommunikationsentität 203 mit gegenüber einem Normalbetrieb reduzierter Sendeleistung weiter. Daraufhin können die erste Kommunikationsentität 201 und die dritte Kommunikationsentität 203 eine mittels der vorbestimmten Nachricht gesicherte Kommunikationsverbindung aufbauen.

Die zweite Kommunikationsentität 202 leitet also gemäß einer Ausführungsform durch den Austausch der vorbestimmten Nachricht das Pairing zwischen der ersten Kommunikationsentität 201 und der dritten Kommunikationsentität 203.

Gemäß einer Ausführungsform kann die zweite Kommunikationsentität 202 in gleicher Weise wie vorstehend ausgeführt, d.h. unter Reduktion der Sendeleistung, die vorbestimmte Nachricht, beispielweise einen kryptographischen Schlüssel oder einen Zugangsberechtigungscode, an einen oder mehrere der weiteren Aktoren 103a-103d übermitteln. Die weiteren Aktoren 103a-103d können dann unter Verwendung der vorbestimmten Nachricht jeweils eine sichere Kommunikationsverbindung zu der zweiten Kommunikationsentität aufbauen.

Die Steuerentität 204 kann gemäß einer Ausführungsform, beispielsweise unter Verwendung eines weiteren Zugangsberechtigungscodes, der nicht der vorbestimmten Nachricht gleicht, einen gesicherten Kommunikationskanal zu der ersten Kommunikationsentität 201 aufbauen. Der Kommunikationskanal F kann über WLAN beispielsweise mittels IP Protokoll aufgebaut werden. Über den Kommunikationskanal F kann der berechtigte Nutzer 204 dann einen Steuercode G an das Home Gateway 201 übertragen. Das Home Gateway 201 kann diesen Steuercode in einen Steuerbefehl an eine Kommunikationsentität, beispielsweise die hier gezeigten Türschließanlage 203 umwandeln und mittels gesicherter Übertragung über den Kommunikationskanal E übertragen. So kann der berechtigte Nutzer beispielsweise veranlassen, dass sich die Tür öffnet oder schließt.

Die dritte Kommunikationsentität 203 kann bei Vorliegen einer Kommunikationsverbindung, insbesondere einer sicheren Kommunikationsverbindung, zwischen der ersten Kommunikationsentität 201 und der dritten Kommunikationsentität 203 mittels der Steuerentität 204 gesteuert werden. Hierzu kann die Steuereinheit 204 eine Kommunikationsverbindung, beispielsweise eine WLAN-Verbindung, zu der ersten Kommunikationsentität 201 aufbauen. Gemäß einer Ausführungsform authentifiziert sich die Steuerentität 204 gegenüber der ersten Kommunikationsentität 201 beispielsweise unter Verwendung eines Authentifizierungszertifikats bzw. eines weiteren kryptographischen Schlüssels.

In einer alternativen Ausführungsform ist die zweite Kommunikationsentität 202 in der ersten Kommunikationsentität 201 integriert. In diesem Fall kann die erste Kommunikationsentität 201 tragbar ausgebildet sein.

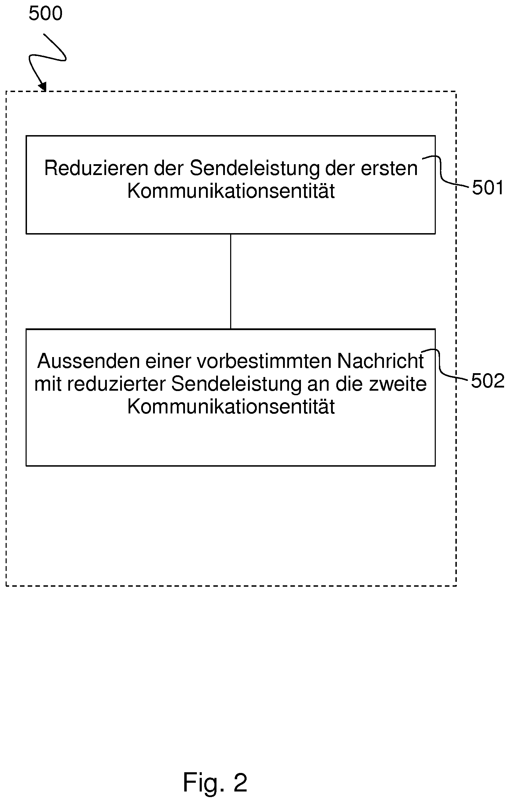

Fig. 2 zeigt eine schematische Darstellung eines Verfahrens 500 zur sicheren Kommunikation zwischen Kommunikationsentitäten in einem Kommunikationsnetzwerk gemäß einer Ausführungsform.

Das Verfahren 500 umfasst ein Reduzieren 501 der Sendeleistung der ersten Kommunikationsentität 201, und ein Aussenden 502 der vorbestimmten Nachricht mit der reduzierten Sendeleistung von der ersten Kommunikationsentität 201 zu der zweiten Kommunikationsentität 202.

In einer Ausführungsform umfasst das Verfahren 500 ein Erhöhen der Sendeleistung der ersten Kommunikationsentität 201 nach dem Aussenden 502 der vorbestimmten Nachricht.

In einer Ausführungsform umfasst das Verfahren 500 ein Reduzieren der Sendeleistung der zweiten Kommunikationsentität 202; und ein Aussenden der vorbestimmten Nachricht mit der reduzierten Sendeleistung von der zweiten Kommunikationsentität 202 zu der dritten Kommunikationsentität 203.

In einer Ausführungsform umfasst das Verfahren 500 ein Aussenden der vorbestimmten Nachricht über eine Bluetooth-Kommunikationsverbindung.

In einer Ausführungsform umfasst das Verfahren 500 ein Erhöhen der Sendeleistung durch die jeweilige Kommunikationsentität 201, 202 unmittelbar nach dem Aussenden der vorbestimmten Nachricht.

In einer Ausführungsform umfasst das Verfahren 500 ein Aufbauen einer sicheren Kommunikationsverbindung, insbesondere einer sicheren Bluetooth-Kommunikationsverbindung, zwischen der dritten Kommunikationsentität 203 und der ersten Kommunikationsentität 201 unter Verwendung der vorbestimmten Nachricht mit gegenüber der jeweils reduzierten Sendeleistung erhöhter, insbesondere regulärer Sendeleistung.

In einer Ausführungsform des Verfahrens 500 wird über die sichere bzw. verschlüsselte Kommunikationsverbindung ein Pairing zwischen der dritten Kommunikationsentität 203 und der ersten Kommunikationsentität 201 durchgeführt.

In einer Ausführungsform umfasst das Verfahren 500 ein Aufbauen einer Kommunikationsverbindung, insbesondere einer WLAN-Kommunikationsverbindung, zwischen der Steuerentität 204 und der ersten Kommunikationsentität 201.

In einer Ausführungsform umfasst das Verfahren 500 ein Aussenden eines Steuersignals zur Steuerung der dritten Kommunikationsentität 203 durch die Steuerentität 204 an die erste Kommunikationsentität 201.

In einer Ausführungsform umfasst das Verfahren 500 ein Aussenden eines Steuerbefehls zur Steuerung der dritten Kommunikationsentität 203 zwischen der ersten

Kommunikationsentität 201 und der dritten Kommunikationsentität 203 über die sichere bzw. verschlüsselte Kommunikationsverbindung.

In einer Ausführungsform des Verfahrens 500 ist die vorbestimmte Nachricht ein kryptographischer Schlüssel.

In einer Ausführungsform des Verfahrens 500 ist die vorbestimmte Nachricht ein digitales Zertifikat.

In einer Ausführungsform des Verfahrens 500 wird die jeweils reduzierte Sendeleistung für eine reduzierte Signalreichweite reduziert. In einer Ausführungsform des Verfahrens 500 wird die jeweils reduzierte Sendeleistung für eine reduzierte Signalreichweite geringer als eine der folgenden Abstände reduziert: 50 cm, 1m, 2m, 3m, 4m, 5m, 6m, 7m, 8m, 9m, 10m, 15m.

Das Verfahren 500 kann in dem Kommunikationssystem 200 implementiert sein bzw. durch das Kommunikationssystem 200 ausgeführt sein.

## Patentansprüche

1. Verfahren (500) zur sicheren Kommunikation zwischen Kommunikationsentitäten in einem Kommunikationsnetzwerk, mit:
Reduzieren (501) der Sendeleistung einer ersten Kommunikationsentität (201);
Aussenden (502) einer vorbestimmten Nachricht mit der reduzierten Sendeleistung von der ersten Kommunikationsentität (201) zu einer zweiten Kommunikationsentität (202);
Reduzieren der Sendeleistung der zweiten Kommunikationsentität (202);
Aussenden der vorbestimmten Nachricht mit der reduzierten Sendeleistung von der zweiten Kommunikationsentität (202) zu einer dritten Kommunikationsentität (203);
Aufbauen einer sicheren Kommunikationsverbindung zwischen der dritten Kommunikationsentität (203) und der ersten Kommunikationsentität (201) unter Verwendung der vorbestimmten Nachricht mit gegenüber der jeweils reduzierten Sendeleistung erhöhter Sendeleistung,
**dadurch gekennzeichnet, dass**
über die sichere Kommunikationsverbindung ein Pairing zwischen der dritten Kommunikationsentität (203) und der ersten Kommunikationsentität (201) durchgeführt wird.

2. Verfahren (500) nach Anspruch 1, mit:
Erhöhen der Sendeleistung der ersten Kommunikationsentität (201) nach dem Aussenden der vorbestimmten Nachricht.

3. Verfahren (500) nach einem der vorstehenden Ansprüche, mit:
Aussenden der vorbestimmten Nachricht mit der reduzierten Sendeleistung von der zweiten Kommunikationsentität (202) zu einer dritten Kommunikationsentität (203) über eine Bluetooth-Kommunikationsverbindung.

4. Verfahren (500) nach Anspruch 3, mit:
Erhöhen der Sendeleistung der zweiten Kommunikationsentität (202) nach dem Aussenden der vorbestimmten Nachricht.

5. Verfahren (500) nach Anspruch 3 oder 4, mit:
Aufbauen einer sicheren Bluetooth-Kommunikationsverbindung zwischen der dritten Kommunikationsentität (203) und der ersten Kommunikationsentität (201) unter Verwendung der vorbestimmten Nachricht mit gegenüber der jeweils reduzierten Sendeleistung erhöhter Sendeleistung.

6. Verfahren (500) nach Anspruch 5,
bei dem über eine verschlüsselte Kommunikationsverbindung ein Pairing zwischen der dritten Kommunikationsentität (203) und der ersten Kommunikationsentität (201) durchgeführt wird.

7. Verfahren (500) nach Anspruch 6, mit:
Aufbauen einer Kommunikationsverbindung, insbesondere einer WLAN Kommunikationsverbindung, zwischen einer Steuerentität (204) und der ersten Kommunikationsentität (201);
Aussenden eines Steuersignals zur Steuerung der dritten Kommunikationsentität (203) durch die Steuerentität (204) an die erste Kommunikationsentität (201); und
Aussenden eines Steuerbefehls zur Steuerung der dritten Kommunikationsentität (203) zwischen der ersten Kommunikationsentität (201) und der dritten Kommunikationsentität (203) über die sichere, insbesondere verschlüsselte Kommunikationsverbindung.

8. Verfahren (500) nach Anspruch 7,
bei dem die dritte Kommunikationsentität (203) ein steuerbarer Aktor, insbesondere eine Tür-Schließanlage oder ein Elektromotor oder ein Haushaltsgerät ist, und
bei dem die erste Kommunikationsentität (202) ein Kommunikationsserver, insbesondere ein Home Gateway, ist.

9. Verfahren (500) nach einem der vorstehenden Ansprüche,
wobei die vorbestimmte Nachricht ein kryptographischer Schlüssel oder ein digitales Zertifikat ist.

10. Verfahren (500) nach einem der vorstehenden Ansprüche,
bei dem die jeweils reduzierte Sendeleistung für eine reduzierte Signalreichweite, insbesondere geringer als 1 Meter oder 0.2 m, reduziert wird.

11. Kommunikationssystem (200) mit einer ersten Kommunikationsentität (201), einer zweiten Kommunikationsentität (202) und einer dritten Kommunikationsentität (203), wobei
die erste Kommunikationsentität (201) ausgebildet ist, die Sendeleistung zum Aussenden einer vorbestimmten Nachricht zu reduzieren und die vorbestimmte Nachricht an die zweite Kommunikationsentität (202) mit der reduzierten Sendeleistung auszusenden und die Sendeleistung nach dem Aussenden der vorbestimmten Nachricht (Key) zu erhöhen;
die zweite Kommunikationsentität (202) ausgebildet ist, die vorbestimmte Nachricht mit reduzierter Sendeleistung an die dritte Kommunikationsentität (203) auszusenden;
die dritte Kommunikationsentität (203) ausgebildet ist, unter Verwendung der vorbestimmten Nachricht eine sichere Kommunikationsverbindung zu der ersten Kommunikationsentität (201) mit gegenüber der reduzierten Signalleistung erhöhter Signalleistung aufzubauen,
**dadurch gekennzeichnet, dass**
die dritte Kommunikationsentität (203) und die erste Kommunikationsentität (201) ausgebildet sind, über die sichere Kommunikationsverbindung ein Pairing durchzuführen.

12. Kommunikationssystem (200) nach Anspruch 11,
bei dem die dritte Kommunikationsentität (203) ein steuerbarer Aktor, insbesondere eine Tür-Schließanlage oder ein Elektromotor oder ein Haushaltsgerät ist, und
bei dem die erste Kommunikationsentität (201) ein Kommunikationsserver, insbesondere ein Home Gateway, ist.

## Claims

1. Method (500) for secure communication between communication entities in a communication network, comprising:
reducing (501) the transmission power of a first communication entity (201);
transmitting (502) a predetermined message comprising the reduced transmission power from the first communication entity (201) to a second communication entity (202);
reducing the transmission power of the second communication entity (202);
transmitting the predetermined message comprising the reduced transmission power from the second communication entity (202) to a third communication entity (203);
establishing a secure communication connection between the third communication entity (203) and the first communication entity (201) by using the predetermined message comprising increased transmission power compared to the respective reduced transmission power,
**characterized in that**
via the secure communication connection a pairing between the third communication entity (203) and the first communication entity (201) is performed.

2. Method (500) according to claim 1, comprising:
increasing the transmission power of the first communication entity (201) after the transmission of the predetermined message.

3. Method (500) according to any one of the preceding claims, comprising:
transmitting the predetermined message comprising the reduced transmission power from the second communication entity (202) to a third communication entity (203) via a Bluetooth-communication-connection.

4. Method (500) according to claim 3, comprising:
increasing the transmission power of the second communication entity (202) after the transmission of the predetermined message.

5. Method (500) according to claim 3 or 4, comprising:
establishing a secure Bluetooth-communication-connection between the third communication entity (203) and the first communication entity (201) by using the predetermined message comprising increased transmission power compared to the respective reduced transmission power.

6. Method (500) according to claim 5,
whereby via an encrypted communication connection a pairing between the third communication entity (203) and the first communication entity (201) is performed.

7. Method (500) according to claim 6, comprising:
establishing a communication connection, in particular a WLAN communication connection, between a control entity (204) and the first communication entity (201);
transmitting a control signal to the first communication entity (201) for controlling the third communication entity (203) by the control entity (204); and
transmitting a control command between the first communication entity (201) and the third communication entity (203) for controlling the third communication entity (203) via the secure, in particular encrypted communication connection.

8. Method (500) according to claim 7,
whereby the third communication entity (203) is a controllable actuator, in particular a door-locking system or an electric motor or a household appliance, and
whereby the first communication entity (202) is a communication server, in particular a home gateway.

9. Method (500) according to any one of the preceding claims,
wherein the predetermined message is a cryptographic key or a digital certificate.

10. Method (500) according to any one of the preceding claims,
whereby the respective reduced transmission power is reduced for a reduced signal range, in particular lower than 1 meter or 0.2 m.

11. Communication system (200) comprising a first communication entity (201), a second communication entity (202), and a third communication entity (203), wherein
the first communication system (201) is configured to reduce the transmission power for transmitting a predetermined message and to transmit the predetermined message to the second communication entity (202) with the reduced transmission power and to increase the transmission power after the transmission of the predetermined (key) message;
the second communication entity (202) is configured to transmit the predetermined message comprising the reduced transmission power to the third communication entity (203);
the third communication entity (203) is configured to establish a secure communication connection to the first communication entity (201) using the predetermined message with the increased signal power compared to the reduced signal power,
**characterized in that**
the third communication entity (203) and the first communication entity (201) are configured to perform a pairing via the secure communication connection.

12. Communication system (200) according to claim 11,
whereby the third communication entity (203) is a controllable actuator, in particular a door-locking system or an electric motor or a household appliance, and
whereby the first communication entity (201) is a communication server, in particular a home gateway.

## Revendications

1. Procédé (500) pour une communication sécurisée entre des entités de communication dans un réseau de communication, comportant les étapes de:
réduire (501) la puissance de transmission d'une première entité de communication (201);
transmettre (502) un message prédéterminé ayant la puissance de transmission réduite de la première entité de communication (201) vers une deuxième entité de communication (202);
réduire la puissance de transmission de la deuxième entité de communication (202);
transmettre le message prédéterminé ayant la puissance de transmission réduite de la deuxième entité de communication (202) vers une troisième entité de communication (203);
établir une connexion de communication sécurisée entre la troisième entité de communication (203) et la première entité de communication (201) en utilisant le message prédéterminé ayant une puissance de transmission augmentée par rapport à la puissance de transmission réduite respective,
**caractérisé en ce qu'**:
un appairage entre la troisième entité de communication (203) et la première entité de communication (201) est réalisé à travers la connexion de communication sécurisée.

2. Procédé (500) selon la revendication 1, comportant l'étape d':
augmenter la puissance de transmission de la première entité de communication (201) après l'étape de transmettre le message prédéterminé.

3. Procédé (500) selon l'une des revendications précédentes, comportant l'étape de:
transmettre le message prédéterminé ayant la puissance de transmission réduite de la deuxième entité de communication (202) vers une troisième entité de communication (203) à travers une connexion de communication Bluetooth.

4. Procédé (500) selon la revendication 3, comportant l'étape d':
augmenter la puissance de transmission de la deuxième entité de communication (202) après l'étape de transmettre le message prédéterminé.

5. Procédé (500) selon la revendication 3 ou 4, comportant l'étape de:
construire une connexion de communication Bluetooth sécurisée entre la troisième entité de communication (203) et la première entité de communication (201) en utilisant le message prédéterminé ayant une puissance de transmission augmentée par rapport à la puissance de transmission réduite respective.

6. Procédé (500) selon la revendication 5,
dans lequel un appairage entre la troisième entité de communication (203) et la première entité de communication (201) est réalisé à travers une connexion de communication cryptée.

7. Procédé (500) selon la revendication 6, comportant les étapes de:
construire une connexion de communication, en particulier une connexion de communication WLAN, entre une entité de contrôle (204) et la première entité de communication (201);
transmettre un signal de contrôle pour contrôler la troisième entité de communication (203) à travers l'entité de contrôle (204) à la première entité de communication (201); et
transmettre une commande de contrôle pour contrôler la troisième entité de communication (203) entre la première entité de communication (201) et la troisième entité de communication (203) à travers la connexion de communication sécurisée, en particulier cryptée.

8. Procédé (500) selon la revendication 7,
dans lequel la troisième entité de communication (203) est un actionneur contrôlable, en particulier un système de verrouillage de porte ou un moteur électrique ou un appareil domestique, et
dans lequel la première entité de communication (202) est un serveur de communication, en particulier une passerelle domestique.

9. Procédé (500) selon l'une des revendications précédentes,
dans lequel le message prédéterminé est une clé cryptographique ou un certificat digital.

10. Procédé (500) selon l'une des revendications précédentes,
dans lequel la puissance de transmission réduite respective est réduite pour une portée de signal réduite, en particulier inférieure à 1 mètre ou 0.2 m.

11. Système de communication (200) comportant une première entité de communication (201), une deuxième entité de communication (202) et une troisième entité de communication (203), dans lequel:
la première entité de communication (201) est conçue pour réduire la puissance de transmission d'un message prédéterminé et pour transmettre le message prédéterminé à la deuxième entité de communication (202) comportant la puissance de transmission réduite et pour augmenter la puissance de transmission après l'étape de transmettre le message (clé) prédéterminé;
la deuxième entité de communication (202) est conçue pour transmettre le message prédéterminé comportant une puissance de transmission réduite à la troisième entité de communication (203);
la troisième entité de communication (203) est conçue pour construire une connexion de communication sécurisée avec la première entité de communication (201) ayant une puissance de signal augmentée par rapport à la puissance de signal réduite en utilisant le message prédéterminé,
**caractérisé en ce que**:
la troisième entité de communication (203) et la première entité de communication (201) sont conçues pour réaliser un appairage à travers la connexion de communication sécurisée.

12. Système de communication (200) selon la revendication 11,
dans lequel la troisième entité de communication (203) est un actionneur contrôlable, en particulier un système de verrouillage de porte ou un moteur électrique ou un appareil domestique, et
dans lequel la première entité de communication (201) est un serveur de communication, en particulier une passerelle domestique.
